Europäisches Patentamt

European Patent Office

Office européen des brevets

(11) Veröffentlichungsnummer: **0 052 792**

A2

## (12) EUROPÄISCHE PATENTANMELDUNG

(21) Anmeldenummer: 81109095.0

(22) Anmeldetag: 28.10.81

(51) Int. Cl.³: **B 62 D 53/08**

(30) Priorität: 25.11.80 CH 8685/80

(43) Veröffentlichungstag der Anmeldung:
02.06.82 Patentblatt 82/22

(84) Benannte Vertragsstaaten:
AT BE DE FR GB IT NL SE

(71) Anmelder: GEORG FISCHER AKTIENGESELLSCHAFT
Mühlentalstrasse 105
CH-8201 Schaffhausen(CH)

(72) Erfinder: Jakob, Lothar
Schrotzburgstrasse 1
D-7702 Gottmadingen(DE)

(54) Verstellbare Satteleinrichtung.

(57) Die Sattelkupplung (28) hat zwei Lagerböcke (6, 7), die vertikal zu je einem Träger (2, 3) ausgerichtet und mittels Bolzen (23) damit verbunden sind, so dass keine Montageplatte benötigt wird. Der Träger kann entweder ein Hauptträger (2, 3) am Fahrgestell der Zugmaschine oder ein Hilfsträger (12, 13) sein. Die Bolzen (23) können horizontal oder vertikal eingesetzt sein. Wenn entsprechende Oeffnungen (16, 17) in den Haupt- (2, 3) oder Hilfsträger (12, 13) vorhanden sind, kann die Sattelkupplung, auch ohne Schlitten und Grundrahmen, verschiebbar ausgebildet sein. Die Lagerböcke (6, 7) können quer zur Fahrzeuglängsachse veränderbar ausgeführt sein, um eine vertikale Ausrichtung mit den Trägern zu ermöglichen.

Fig. 1

EP 0 052 792 A2

Croydon Printing Company Ltd.

GEORG FISCHER AKTIENGESELLSCHAFT,    8201 Schaffhausen

2193/FzT / 31.8.1981 / Lg-ba /

Satteleinrichtung    BEZEICHNUNG GEÄNDERT
                         siehe Titelseite

Die Erfindung betrifft eine Satteleinrichtung gemäss
dem Oberbegriff des 1. Anspruches.

Die meisten Sattelkupplungen sind mittels einer normalerweise Verstärkungsrippen aufweisenden Montageplatte
mit einem Lochbild fest auf der Zugmaschine befestigt.

Andere, längs der Fahrzeuglängsachse verschiebbaren
Sattelkupplungen enthalten einen Grundrahmen mit Zahn-
und Führungsleisten, wobei der Grundrahmen fest mit der
Zugmaschine verbunden ist. Ueber dem Grundrahmen ist
ein Schlitten mit einem Bedienungs- und Arretiermechanismus angeordnet, der als verschiebbare Einheit ausgeführt ist und die eigentliche Sattelkupplung aufnimmt.

Ausgehend von diesem Stand der Technik ist es Aufgabe
der vorliegenden Erfindung, eine Sattelkupplung vorzuschlagen, die ohne Montageplatte montierbar und deswegen preisgünstiger als bisherige Ausführungen herstellbar ist, und ferner die Höhe der ganzen Satteleinrichtung reduziert. Auch sollte die zu schaffende Satteleinrichtung, ohne Grundrahmen und Schlitten, in eine verschiebbare Sattelkupplung umwandelbar sein.

Diese Aufgabe wird erfindungsgemäss mit der Lehre gemäss dem Kennzeichen des ersten Anspruches gelöst.

Ausführungsformen dieser Lehre sind in den weiteren, abhängigen Ansprüchen umschrieben.

Die Senkung der Herstellungskosten, die Reduktion der Gesamthöhe und die Materialersparnis kommen besonders bei einer verschiebbaren Sattelkupplung zur Geltung. Wichtig ist ferner, dass eine fest zu montierende Sattelkupplung ohne zusätzliche Kosten in eine Verschiebekupplung umwandelbar ist, wenn sich dies zu einem späteren Zeitpunkt als zweckmässig erweisen sollte.

Die Erfindung wird nunmehr anhand einiger in der Zeichnung dargestellten Ausführungsbeispielen näher erläutert.

Es zeigen:

Fig. 1    eine schrägbildliche, auseinanderliegende Darstellung einer Satteleinrichtung gemäss einer ersten Ausführungsform,

Fig. 2    einen Schnitt längs der Linie II - II in Fig. 1,

Fig. 3        eine erste Variante zu Fig. 2,

Fig. 4        eine zweite Variante zu Fig. 2,

Fig. 5        eine dritte Variante zu Fig. 2,

Fig. 6        eine vierte Variante zu Fig. 2,

Fig. 7        eine fünfte Variante zu Fig. 2 im Teilschnitt,

Fig. 8        eine Variante zu Fig. 7,

Fig. 9        eine sechste Variante zu Fig. 2,

Fig. 10       eine Variante zu Fig. 9, und

Fig. 11       eine siebente Variante zu Fig. 2.

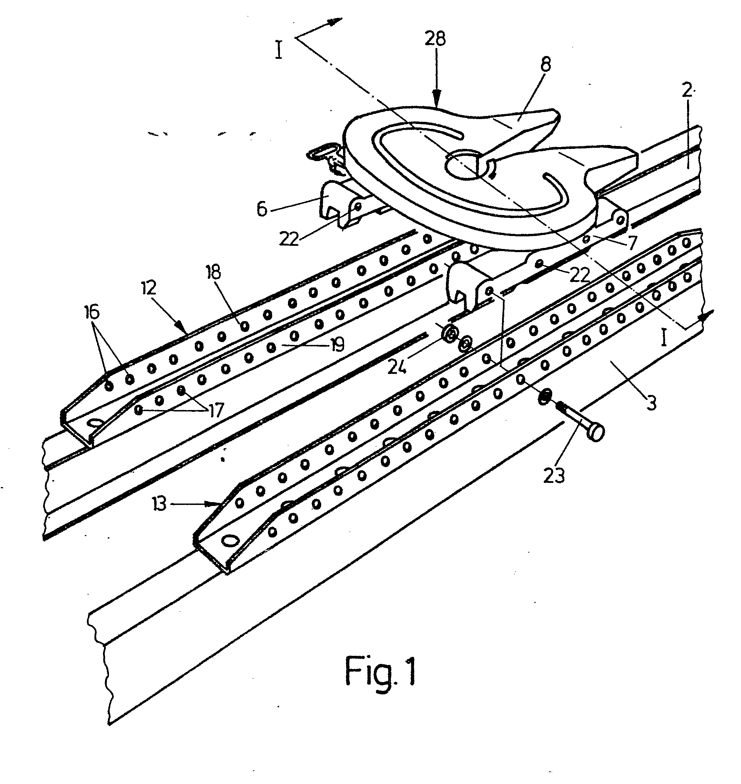

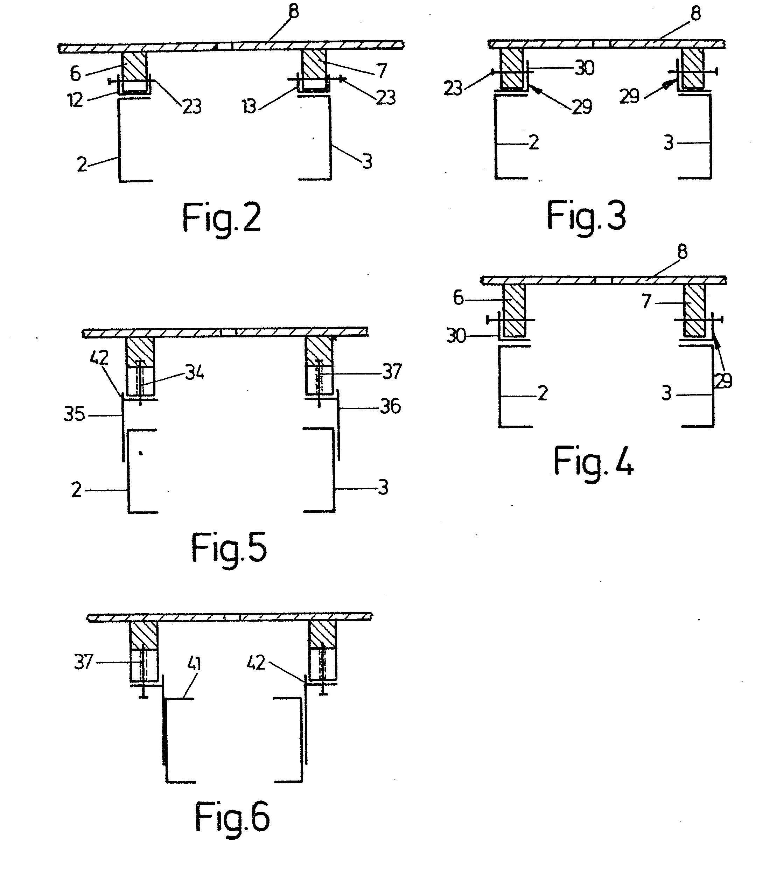

In Fig. 1 und 2 sind zwei parallele Fahrzeug-Hauptträger 2, 3 sowie zwei Lagerböcke 6, 7 dargestellt,
die mit einer gemeinsamen Kupplungsplatte 8 verbunden
sind, wobei die Lagerböcke 6, 7 vertikal über den
Hauptträgern 2, 3 angeordnet sind.

Zur Befestigung der Lagerböcke 6, 7 an den Trägern 2,
3 sind U-förmige Hilfsträger 12, 13 auf den Hauptträgern 2, 3 befestigt. Die Hilfsträger 12, 13 bilden
einen Hilfsrahmen und erhöhen die Festigkeit. In den
aufstehenden Flanschen 18, 19 der Hilfsträger sind
horizontal verlaufende Oeffnungen 16, 17 und ferner
horizontal ausgerichtete Oeffnungen 22 in den Lagerböcken 6, 7 vorhanden. Ein oder mehrere Bolzen 23 pro Lagerbock werden in die Oeffnungen 17, 22, 16 eingesetzt und durch Muttern 24 gesichert. Die ganze
Sattelkupplung 28 ist längs der Fahrzeuglängsachse
verschiebbar, wenn die Bolzen 23 aus den Oeffnungen
16, 22, 17 entfernt sind. Somit kann die Position der
Lagerböcke 6, 7 in den U-förmigen Hilfsträgern 12, 13
geändert werden. Die Bolzen 23 werden dann in anderen
Oeffnungen 16, 17 eingesetzt.

Der Abstand zwischen den Löchern bzw. Oeffnungen 16,
17 am Hilfsrahmen 12, 13 beträgt z.B. 60 mm, so dass
die Sattelkupplung 28 jeweils um 60 mm verschiebbar
ist. Da die Oeffnungen 22 am Lagerbock 6, 7 jedoch
nicht gleichmässig von der Mitte aus verteilt, und um
30 mm versetzt sind, ist durch Drehen der Lagerböcke
6, 7 auch ein Verschiebeweg von nur 30 mm möglich.
Somit kann die Kupplung sowohl um 60 als auch um 30 mm
verschoben werden.

Auch winkelförmige Hilfsträger 29 sind verwendbar,
wie die Fig. 3 und 4 zeigen, wobei Oeffnungen im aufstehenden Schenkel 30 zur Befestigung vorgesehen sind.
Bolzen 23 werden durch die Oeffnungen 22 und die Oeffnungen im Schenkel 30 eingesetzt und mittels Muttern
gesichert.

Die Hilfsträger 29 können verschiedenartig montiert
werden. Wie aus Fig. 3 und 4 hervorgeht, sind die
Hilfsträger spiegelbildlich zueinander angeordnet,
wobei gemäss Fig. 3 ihre aufsteheden Schenkel 30 einander gegenüber liegen und wobei gemäss Fig. 4 die
aufstehenden Schenkel 30 einander abgewandt sind.
Beide Ausführungen gewähren eine Führung für die
Lagerböcke 6, 7.

Fig. 5 zeigt eine vierte Ausführungsform, bei welcher im wesentlichen winkelförmige Hilfsträger 35, 36 an den Hauptträgern 2, 3 befestigt sind und zwar derart, dass der eine Schenkel vertikal abwärts gerichtet und durch Schweissen oder Nieten am Hauptträger befestigt ist, wobei der andere Schenkel horizontal ist und vertikal ausgerichtet mit Abstand über dem Hauptträger angeordnet ist.

Der Lagerbock 7 hat die Schlittenform gemäss Fig. 1, wobei vertikal verlaufende Oeffnungen 37 in den Lagerböcken 6, 7 vorgesehen sind. Bolzen 34 gehen durch die Oeffnungen 37 und durch entsprechende Oeffnungen im horizontalen Schenkel der Hilfsträger. Diese Schenkel können parallel und richtungsgleich zu den Schenkeln der Hauptträger verlaufen, und sind im dargestellten Fall gegeneinander gerichtet. Diese Ausführung kommt zur Anwendung wenn der Abstand zwischen den Lagerböcken dem Abstand zwischen den Hauptträgern entspricht.

Fig. 6 zeigt eine der Fig. 5 ähnliche Ausführung, nur sind die horizontalen Schenkel voneinander abgewandt, was Vorteile bringt, erstens ergibt sich eine Anpassungsmöglichkeit für den Fall, dass der Abstand zwischen den Lagerböcken nicht dem Abstand zwischen den Hauptträgern entspricht, und zweitens ist es in vielen Fällen einfacher, die Bolzen von unten her vertikal in die Oeffnung einzusetzen.

Die Verwendung von Hilfsträgern ist z.B. dann nicht unbedingt notwendig, wenn die horizontalen Flansche 41 der Hauptträger 2, 3 eine Reihe von Oeffnungen darin ermöglichen. In diesem Falle sind die Bolzen ebenfalls vertikal ausgerichtet.

Zur besseren Führung der Lagerböcke können Leisten 42 vorgesehen sein.

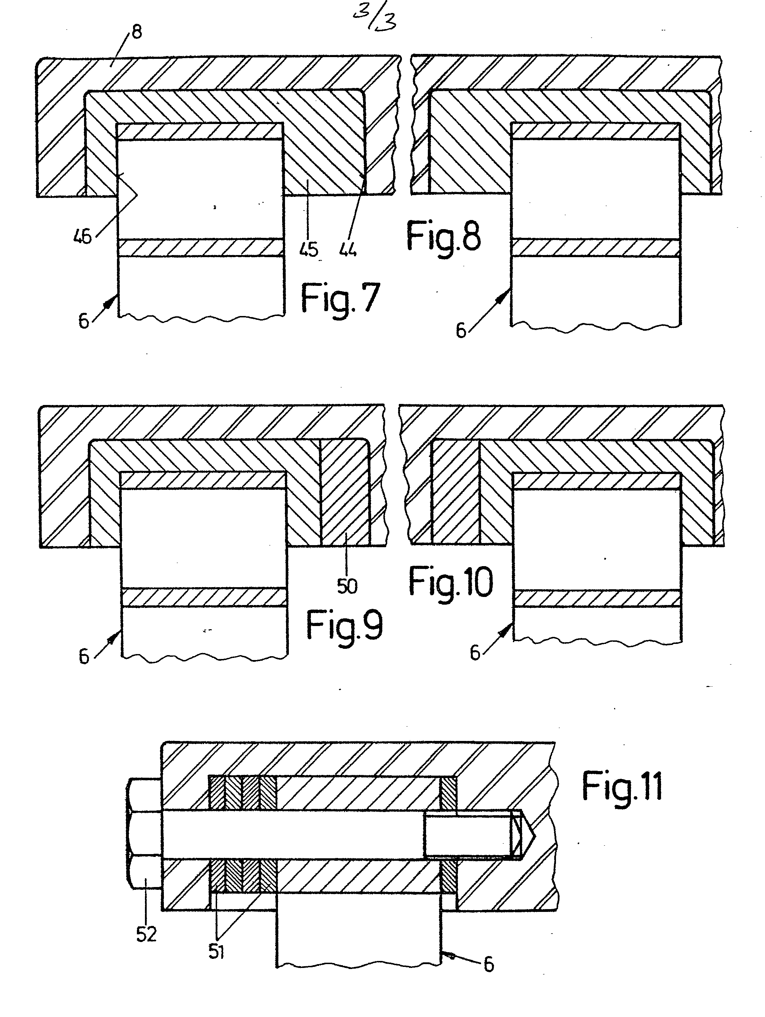

Bei den Ausführungen gemäss den Fig. 7 bis 11 ist der Abstand zwischen den Lagerböcken einstellbar. Fig. 7 zeigt an der Unterseite der Kupplungsplatte acht Taschen 44, die mit einer Gummieinlage 45 ausgefüllt sind. In eine nach unten offene Ausnehmung 46 ist der Lagerbock 6 eingepasst. Diese Ausnehmung 46 ist asymmetrisch zur Symmetrieachse der Gummieinlage angeordnet. Die Erläuterung ist wie folgt: der Lagerbock 6 gemäss Fig. 7 und der spiegelbildlich angeordnete Lagerbock 7 haben also den grössten Abstand zueinander. Dreht man jedoch die Einlage 45 um und passt sie in die Tasche 44 hinein, wie es die Fig. 8 zeigt, dann kommen die Ausnehmungen 46 und somit die Lagerböcke 6, 7 näher zueinander.

Eine Aenderung des gegenseitigen Abstands der Lagerböcke 6, 7 ist auch mittels Ausgleichsstücken 50, z.B. aus Gummi, erreichbar. Das Ausgleichsstück 50 ist entweder links oder rechts des Lagerbocks 6 einsetzbar. Diese Ausführungen sind in den Fig. 9 und 10 gezeigt.

Fig. 11 zeigt, dass auch Scheiben 51 z.B. um einen Bolzen 52, verwendbar sind, der zum Verbinden des Lagerbocks 6 mit der Kupplungsplatte 8 benutzt wird. Die ringförmigen Scheiben 51 ermöglichen eine Fein-verstellung des Abstandes.

<u>Patentansprüche</u>

2193/FzT

1. Satteleinrichtung zwischen einer Zugmaschine und einem Auflieger, mit einer Sattelkupplung (28) mit zwei Lagerböcken (6, 7), und mit einem Fahrzeug- und/oder Hilfsrahmen an der Zugmaschine, wobei der Rahmen parallel zur Fahrzeuglängsachse verlaufende Träger (2, 3, 12, 13, 29, 35, 36) aufweist, und die Sattelkupplung mittels Bolzen (23, 34) an den Trägern befestigt ist, dadurch gekennzeichnet, dass jeder Lagerbock (6, 7) vertikal zu einem Träger ausgerichtet ist.

2. Satteleinrichtung nach Anspruch 1, dadurch gekennzeichnet, dass U-förmige Hilfsträger (12, 13) an je zwei Hauptträgern (2, 3) befestigt sind, in welchen die Lagerböcke verschiebbar sind, und dass Bolzen (23) gleichzeitig in Oeffnungen (22) im Lagerbock und in entsprechende Oeffnungen (16, 17) in den vertikalen Flanschen (18, 19) der Hilfsträger (12, 13) horizontal einsetzbar sind.

3. Satteleinrichtung nach Anspruch 1, dadurch gekennzeichnet, dass winkelförmige Hilfsträger (29) an den Hauptträgern (2, 3) befestigt sind, auf welchen die Lagerböcke verschiebbar sind, und dass Bolzen (23) gleichzeitig in Oeffnungen (22) im Lagerbock und in Oeffnungen im aufstehenden Schenkel (30) der Hilfsträger (29) horizontal einsetzbar sind (Fig. 3).

4. Satteleinrichtung nach Anspruch 3, dadurch gekennzeichnet, dass die winkelförmige Hilfsträger (29) spiegelbildlich zueinander angeordnet sind (Fig. 3, 4).

5. Satteleinrichtung nach Anspruch 1, dadurch gekennzeichnet, dass die Bolzen (34) gleichzeitig in Oeffnungen (37) im Lagerbock und im Haupt- (2, 3) oder Hilfsträger (35, 36) vertikal einsetzbar sind (Fig. 5, 6).

6. Satteleinrichtung nach Anspruch 5, dadurch gekennzeichnet, dass winkelförmige, am Hauptträger (2, 3) befestigte Hilfsträger (35, 36) vorgesehen sind, deren Schenkel parallel und richtungsgleich zu den Schenkeln der Hauptträger verlaufen (Fig. 5).

7. Satteleinrichtung nach Anspruch 6, dadurch gekennzeichnet, dass die horizontalen Schenkel der Hilfsträger (41, 42) voneinander abgewandt sind (Fig. 6).

8. Satteleinrichtung nach Anspruch 1, dadurch gekennzeichnet, dass der Abstand zwischen den Lagerböcken veränderbar ist (Fig. 7 bis 11).

9. Satteleinrichtung nach Anspruch 8, wobei die Lagerböcke in mit Einlagen (45) ausgekleideten Taschen (44) der Kupplungsplatte (8) gelagert sind, dadurch gekennzeichnet, dass die Einlage (45) die Tasche (44) jeweils ausfüllt und auch umgedreht in die Tasche einpassbar ist, und dass eine nach unten offene Ausnehmung (46) für den Lagerbock asymmetrisch in der Einlage (45) liegt.

10. Satteleinrichtung nach Anspruch 9, dadurch gekennzeichnet, dass die Einlage (45) ein Ausgleichsstück (50) aufweist, wobei das Ausgleichsstück, in Querrichtung zur Fahrzeuglängsachse gesehen, beidseits der Einlage einsetzbar ist.

11. Satteleinrichtung nach Anspruch 10, dadurch gekennzeichnet, dass das Ausgleichsstück aus mindestens einer Scheibe (51) besteht.

0052792

Fig.1

2193 / FzT

2/3

Fig.2

Fig.3

Fig.5

Fig.4

Fig.6

Fig. 7

Fig. 8

Fig. 9

Fig. 10

Fig. 11